# EUROPEAN PATENT APPLICATION

(11) **EP 4 764 203 A1**
(43) Date of publication of application: **24.06.2026**
(21) Application number: 24221660.4
(22) Date of filing: 19.12.2024
(51) Int. Cl.: F03D 7/02

(54) **STRUCTURALLY DESIGNING A WIND TURBINE SYSTEM IN VIEW OF POWER GENERATION IN A DEFINED GEOGRAPHIC REGION**

(71) Applicant: VESTAS WIND SYSTEMS A/S, 8200 Aarhus N (DK)
(72) Inventor: Sahoo, Nibedita, 8200 Aarhus N (DK); Canet Yuste, Jorge, 8200 Aarhus N (DK); Jørgensen, Brian, 8464 Galten (DK); Mortensen, Mads Hovmøller, 8240 Risskov (DK); Ortiz Guemes, Alberto, 28028 Madrid (ES)
(74) Representative: Vestas Patents Department

(57) **Abstract**

The present invention relates to structurally designing a wind turbine system including setting a ramp-down wind speed of the wind turbine system. A method is disclosed where wind speed distribution data of a site of the wind turbine system, structural design parameters and a measure for power generation from wind turbines in a defined geographic region are obtained. Based on the measure for power generation, a maximal desired power generation from wind turbines in a geographic region of the wind turbine system is obtained, and a wind speed is determined where the maximal desired power generation is reached. A ramp-down wind speed of the wind turbine system is set to the determined wind speed. In embodiments a target power may be increased above a reference power for a wind speed in a wind speed range, such as in a knee region of the power curve.

## Description

### FIELD OF THE INVENTION

The present disclosure pertains to the field of designing a wind turbine system, and in particular it relates to designing a ramp-down wind speed of the wind turbine system above which a generated power is reduced.

### BACKGROUND OF THE INVENTION

An electrical power grid typically comprises different types of power generators. Wind turbines being one type of generator. The power generators are combined in a regional grid of a geographic region. If the power generators of a regional grid are not producing enough power, power from a connected other grid is imported, whereas if the power generators of a regional grid are producing too much power, the surplus power is either exported or the generators are derated or even shut down.

Wind turbines are typically designed to produce power in a broad range of wind speeds, thereby enabling that a high fraction of power in a geographic region can be generated by wind turbines most of the time. This reduces a need for back-up power from fossil fuel generators. In some geographic regions the number of wind turbines are now so high that when the wind speed is above a certain level, the power production from wind turbines exceeds the power consumption in the geographic region.

Typically, a wind turbine system is designed so that the structural components of the wind turbine can withstand operation for a wide range of wind speeds, leading to that many modern wind turbines can be operated to produce power up to 25 m/s or even higher. At such high wind speeds, the structural loads experienced by the wind turbine system are high, and strong and robust components are needed. In regions with a high fraction of power being produced by wind turbines there may be an electrical overproduction above a certain wind speed leading to shutting down of wind turbines.

It is against this background that the invention has been devised.

### SUMMARY OF THE INVENTION

The inventors of the present invention have realized that while it may be beneficial to increase the number of wind turbines in a region which already comprises a high number of wind turbines in order to reduce or limit fossil free electrical power production at lower wind speeds, the need for building strong and robust components for high wind speed operation may lead to a reluctance of expanding the number of wind turbines in the given region, thus leading to use of fossil fuels for electrical power generations that could have been avoided if the wind turbines were build.

In general, it would be advantageous to achieve/provide a way of designing wind turbines which may reduce an amount of resources needed for building and operating a wind turbine while still ensuring an expansion of electrical power production from wind turbines even in regions which already comprises a large number of wind turbines.

Accordingly, in a first aspect, there is provided a method for structurally designing a wind turbine system, the method comprising:
obtain wind speed distribution data of a site of the wind turbine system, the site of the wind turbine system being in a defined geographic region;
obtain structural design parameters of the wind turbine system, the structural design parameters being associated with one or more design loads;
obtain a measure for power generation from wind turbines in the defined geographic region of the wind turbine system, the measure for power generation from wind turbines is obtained as a function of the wind speed distribution data in the defined geographic region;
based on the measure for power generation, obtain a maximal desired power generation from the wind turbines in the defined geographic region;
determine a wind speed where the maximal desired power generation is reached;
setting a ramp-down wind speed of the wind turbine system to the determined wind speed, the ramp-down wind speed being a wind speed above which a generated power is reduced.

The wind turbine system may be a wind turbine and a foundation for the wind turbine, hereunder an onshore wind turbine foundation, an offshore wind turbine foundation, including a transition piece, and a floating foundation. The wind turbine system may also include guy wires, attachments for guy wires and guy wire foundations.

The defined geographic region may be a region of a connected regional electric grid. For example, Denmark is split into two electrically distinct grids, one covering the eastern part of Denmark and one covering the western part of Denmark. Each regional grid being interconnected to other regional grids. The defined geographic region may be a geographic region comprising one or more electric grids.

When a wind turbine system is to be designed, a site, i.e. the location, of the wind turbine system is determined and wind speed distribution data of that site is obtained. Another important element of designing a wind turbine system is to ensure that the structural design parameters of components of the wind turbine system are such that the loads experienced by the components of the wind turbine system during operation stays below design loads, so that the wind turbine is not damaged or does not break down during intended use.

A measure for power generation from wind turbines in the defined geographic region of the wind turbine is obtained. Such measure may be an amount of power, e.g. in giga watts, produced as a function of mean wind speed in the region. The measure of power generation may be for other wind turbines in the defined region at the time planned for putting in operation the designed wind turbine structure. The measure of power generation may include other planned wind turbines that will be in operation at the time planned for putting in operation the designed wind turbine structure, hereunder other planned wind turbines of a wind farm including the designed wind turbine structure. The measure of power generation may include the power generation of the designed wind turbine structure.

A wind speed, such as a mean wind speed, where the maximal desired power generation is reached can be determined, and the ramp-down speed of the wind turbine system is set to the determined wind speed.

Setting the ramp-down wind in this manner is beneficial as it provides a way of supporting expanding the number of wind turbines in a geographic region without reducing the possible amount of power that can be generated from wind turbines at high wind speeds while increasing the possible amount of power that can be generated from wind turbines at low wind speeds. The wind turbine systems designed by the current method may be designed to be less robust that it otherwise would be in view of the wind speed distribution data of a site of the wind turbine system, and thereby fewer material resources are needed. This without jeopardizing the structural integrity of the wind turbine system, as the power production is reduced during high load operation at high wind speed.

In an embodiment, the method further comprising:
adjusting a structural parameter such that a design load is not reached by the a component of the wind turbine system when the wind turbine system experiences a wind speed at or above the ramp-down wind speed;
designing the wind turbine system with the structural parameter.

Benefits of the present invention is reached already with setting the ramp-down speed to the determined wind speed where the maximal desired power generation is reached, since this ensures that the wind turbine system is less loaded at wind speeds above the ramp-down speed thereby reducing the wear and tear of the wind turbine system. By adjusting a structural parameter and designing the wind turbine system with the structural parameter, less material is used for the construction of the designed wind turbine system.

The wind turbine system may be a system to be newly build at a site in the defined geographic region. The wind turbine system may also be for a repowered wind turbine system. A repowered wind turbine system being a wind turbine system where parts of an older wind turbine system is reused. For example, a tower and a foundation may be used from an older wind turbine system, and a new rotor and nacelle is designed in accordance with embodiments of the present invention.

Based on the measure for power generation, a maximal desired power generation from the wind turbines in the defined geographic region is obtained. The maximal desired power generation may be set based on an estimated power consumption in the defined geographic region. The maximal desired power generation may be set as a fraction of estimated power consumption in the geographic region. For example, the maximal desired power generation can set to be 110% of the estimated power consumption in the geographic region. Other fractions may be used, such as between 100% and 300%, such as between 150% and 200%.

A price profile for the electricity in defined geographic region may be used as a proxy parameter for the balance between produced power and consumed power. In an embodiment, the maximal desired power generation is set based on a price profile for the electricity in defined geographic region.

The estimated power consumption in the geographic region may be based on historic power consumption data, hereunder based on a historic price profile data of the defined geographic region. The estimated power consumption may also include expected or estimated future power consumption in the geographic region, hereunder expected or estimated future price profile data. The maximal desired power generation may also be set as a minimum amount of power generation from wind turbines that is desired to have available in the geographic region.

In an embodiment, the design load is an extreme load of a component of the wind turbine system. In this manner, the operational loads experienced by the wind turbine system is evaluated against a determined extreme load of a component. The extreme load expresses a load limit above which the component risk to fail or break during a single continuous exposure.

In an embodiment, the design load is a fatigue load of a component of the wind turbine system, and wherein the structural parameter is adjusted to reach an expected lifetime of the component. The fatigue load expresses a load exposure over time due to cyclic or repeated load exposure.

The component of the wind turbine system may beneficially be a tower of the wind turbine system or a foundation of the wind turbine system. The tower requires a large amount of steel, and sometimes concrete, whereas a wind turbine foundation requires a large amount of both steel and concrete, depending on the type of foundation. The ability of reducing just a fraction of materials from these components amounts to a large absolute material reduction for the wind turbine system.

Additionally, further components may be selected including a blade bearing type, a bedframe, a converter type, a switch gear.

Certain components of a wind turbine are very difficult or even impossible to replace, and for such components it is important to keep the load exposure below the both the extreme load limit and the fatigue load limit of the component. Other components may be easier to replace, or it may even be needed to replace during the lifetime of the wind turbine system. While the operational extreme load may normally be kept below the extreme load limit for all components, some components may have an expected lifetime lower than an expected lifetime of the wind turbine system and therefore a replacement of the component may be needed. For such components the structural parameter may be adjusted to reach an expected lifetime of the component.

In an embodiment, the ramp-down wind speed is a cut-out wind speed, at which the turbine reduces power generation to zero, or where the reduction of the generated power above the ramp-down wind speed follows a power derate curve with increasing wind speed.

In an embodiment, a target power is increased above a reference power for a wind speed in a wind speed range. By increasing the target power, i.e. the power to be produced at a given wind speed above a reference power, some of the lost power generation from a reduced ramp-down wind speed can be gained at another location on a power curve of the wind turbine system. In an embodiment, the wind speed range is in a knee region of a power curve for the wind turbine. The knee region may include a high part of the partial load region, such as the so-called region III partial load region where the rotor speed has reached rated rotor speed, but the power production is below rated power production. The knee region may include a low part of the full load region, such as the part from the rated wind speed and 3 m/s above, such as 2 m/s above, such as 1 m/s above. The reference power may be the power of a reference power curve of the wind turbine system, e.g. the power curve to which the turbine is certified. The reference power in the partial load region may be defined by a maximal power coefficient, Cp, in the partial load region, and the reference power in the full load region may be defined by a rated power of the wind turbine.

In an embodiment, upon an adjusted maximal desired power generation from the wind turbines in the defined geographic region, the ramp-down wind speed is adjusted to an adjusted ramp-down wind speed, and/or where the reduction of the generated power above the ramp-down wind speed follows a power derate curve with increasing wind speed, the power derate curve is adjusted to an adjusted power derate curve.

A wind turbine system has an expected lifetime of 20 years or more, even 35 years. A wind turbine system designed in accordance with embodiments of the present invention, is designed in dependency upon the power generation from wind turbines in the defined geographic region of the wind turbine. Both the number and nature of wind turbines in the defined geographic region may change, also the maximal desired power generation from the wind turbines in the defined geographic region, may chance during the rather long time of the expected lifetime of the wind turbine system. There may also be other changes, such as decommissioning of fossil fuel power plants. Accordingly, it may be beneficial to adjust the ramp-down wind speed and/or the power derate curve to match a new situation.

As the turbine has been designed with the desired power generation at the time of construction in mind, there may be limits to changes that can be made. It may for example not be possible to increase a wall thickness of a tower or increase the size and weight of a foundation. However, a wind turbine is also designed in view of a realistic, but conservative, climatic exposure. By application of a load estimator for estimating a load impact, an adjusted control strategy of the wind turbine system may be implemented where the control strategy is adjusted based on the estimated load impact. The load impact may both be an accumulated experienced estimated load over a prolonged period, or it may be a current estimated load in view of a current climatic exposure of the wind turbine system.

In a second aspect, the invention relates to a computer program comprising instructions which, when the program is executed by a computer, cause the computer to carry out the method according to the first aspect.

The computer program may be a computer program product and may be in the form of a computer-readable storage medium or being downloadable from a communication network. The computer program comprises instructions, e.g. executable instructions in the form of software code, which when executed by a computer carry out the method according to the first aspect.

The computer program may enable a computer to carry out the instruction when loaded onto the data processing system of the computer. In general, the computer may be a computing system and may be a unit or collection of functional units which comprises one or more processors, input/output interface(s) and a memory capable of storing instructions can be executed by a processor.

The computer may be provided for designing a wind turbine system and/or a structural component of the wind turbine system. Accordingly, the computer may be arranged for receiving/accessing/obtaining various input data, hereunder wind speed distribution data, structural design parameters, power generation data other wind turbines. Other types of data may also be input into the computer.

The method according to the first aspect may be implemented by a computer program utilizing self-learning algorithms and/or machine learning algorithms. In particular, the measure for power generation from wind turbines may be obtained from a machine learning algorithm which has been trained on power generation data and power consumption data for various geographic regions. Such training may be based on correlating wind speed distribution data, wind turbine design data and price profile data in a geographic region.

According to another aspect of the invention there is provided a wind turbine system designed in accordance with the method according to the first aspect.

In general, the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which:
Fig. 1 illustrates, in a schematic view, an example of a wind turbine system;
Fig. 2 illustrates general steps of structurally designing a wind turbine system;
Fig. 3 illustrates a wind profile combined with a power curve of an example wind turbine for a given geographic region; and
Fig. 4 illustrates schematic examples of different power curves.

### DESCRIPTION OF EMBODIMENTS

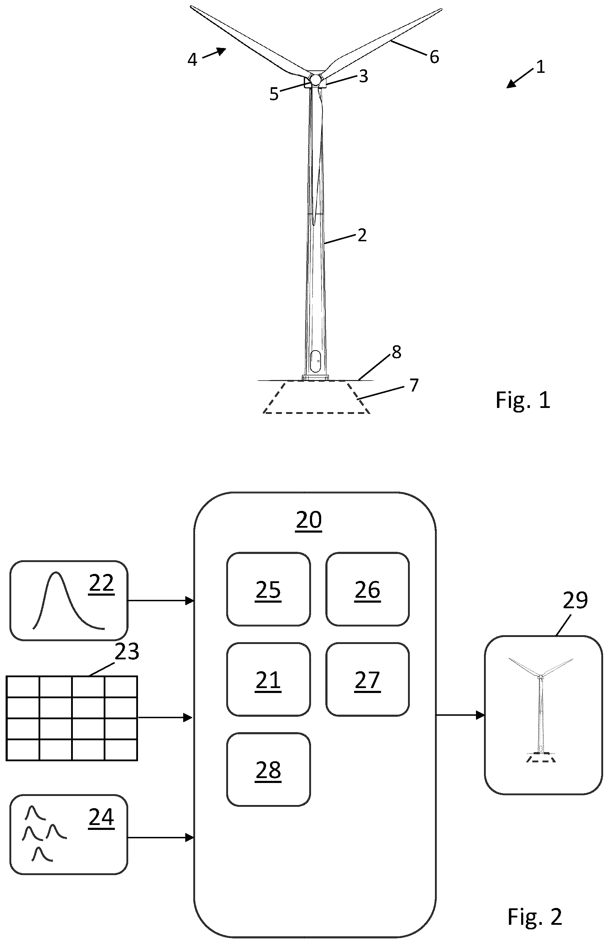

Figure 1 illustrates, in a schematic view, an example of a wind turbine system 1. The wind turbine system 1 includes a tower 2, a nacelle 3 disposed at the apex of the tower, and a rotor 4 operatively coupled to a generator housed inside the nacelle 3. In addition to the generator, the nacelle houses miscellaneous components required for converting wind energy into electrical energy and various components needed to operate, control, and optimize the performance of the wind turbine 1. The rotor 4 of wind turbine includes a central hub 5 and a plurality of blades 6 that project outwardly from the central hub 5. In the illustrated embodiment, the rotor 4 includes three blades 6, but the number may vary. Moreover, the wind turbine system comprises a control system. The control system may be placed inside the nacelle or distributed at a number of locations inside (or externally to) the turbine and communicatively connected. The rotor blades are pitch-adjustable. The rotor blades can be adjusted in accordance with a collective pitch setting, where each of the blades are set to the same pitch value. In addition to that, the rotor blades are adjustable in accordance with individual pitch settings, where each blade may be provided with an individual pitch setting.

The rotor blades 6 are mechanically connected to an electrical generator via a gearbox. In direct drive systems, and other systems, the gear box may not be present. The mechanical connection coupling the rotor and the electrical generator is typically referred to as the drivetrain. The electrical power generated by the generator is injected into an electric grid via an electrical converter. The electrical generator and the converter may be based on a full-scale converter (FSC) architecture or a doubly fed induction generator (DFIG) architecture, but other types may be used. The electrical components of the generator and the converter, possibly including further electrical components is typically referred to as the electrical power system.

The wind turbine system further comprises a foundation 7 extending below a ground level. The foundation may be an armoured block of concrete, sufficiently massive to support the wind turbine under worst case climatic conditions.

A foundation of armoured concrete may be used for an onshore wind turbine, whereas an offshore wind turbine may be a steel structure inserted into a seabed, such as a monopile structure, where the tower itself is attached to a transition piece. In a floating wind turbine, the foundation may be a large structure of concrete and steel with a sufficient buoyancy for the wind turbine to be kept afloat.

The present disclosure relates to a method for designing a wind turbine system.

When designing wind turbine components for manufacture, design loads are an important consideration. The term 'design loads' means a set of load values that the component or system should be designed to withstand. The design loads can therefore be thought of as the maximum loads that the component or system is expected to experience in use during its lifetime. For example, in the field of wind turbines, the design loads may be an extreme load, for example a value for a maximum bending moment that a wind turbine tower is expected to experience under wind loading. The design loads may also be a fatigue load, for example a value for a maximum amount of load cycles a blade bearing can withstand. Fatigue loads may e.g. be determined using the methodology of rain flow counting.

Fig. 2 illustrates general steps of structurally designing a wind turbine system in accordance with embodiments of the present invention.

A computer program is implementing a program element 20 which can be executed to determine 21 a wind speed where the maximal desired power generation is reached.

The wind turbine system is to be designed for a given site, i.e. a specific geographic location where the wind turbine system is to be placed. The site being placed in a defined geographic region. The defined geographic region will in many situations correspond to a regional grid.

Wind speed distribution data of the site is obtained 22. The wind distribution data will vary across the define geographic region, therefore the data is obtained for the specific site of the wind turbine system. This may e.g. be obtained in connection with a measurement campaign leading up to the designing phase.

Structural design parameters associated with one or more design loads are obtained 23. Such structural design parameter may be a steel wall thickness of a tower section associated with an extreme load and a fatigue load for a selected lifetime of the tower section.

Power generation in the defined region is normally done using different types of power plants, in addition to wind farms in the region, coal plants, hydro-generator plants, solar plants, etc. may be present. Importantly is the presence of further wind turbines in the defined geographic region. In particular, in a situation where the further wind turbines in the defined geographic region is producing a considerable amount of the consumed power in the defined geographic region. The power generation from wind turbines in the defined geographic region of the wind turbine can be calculated based on wind speed distribution data in the defined geographic region, and a measure for power generation from wind turbines in the defined geographic region of the wind turbine is obtained 24 as a function of the wind speed distribution data in the defined geographic region.

A maximal desired power generation from the wind turbines in the defined geographic region is obtained 25 based on the measure for power generation, and a wind speed where the maximal desired power generation is reached is determined 21. The ramp-down wind speed of the wind turbine system is set 27 to this determined wind speed.

A structural parameter may be adjusted 28 such that a design load is not reached by the wind turbine structure when exposed to a wind speed at or above the ramp-down wind speed. Finally, the design 29 of the wind turbine system is determined with this structural parameter.

The structural design parameters of the wind turbine system may be represented in different ways. In a simple example, the structural design parameters may be a table of values defining the structural design of the wind turbine system.

The table may e.g. comprise a parameter list of a tower, such as a listing comprising number of tower sections, type of each tower section, wall thickness of each tower section, height of each tower section, flange type and bolt type, etc. The table may comprise cumulative parameters of the tower, such a total height, total weight etc.

The structural design parameters may be associated with design loads of components of the wind turbine system. The design loads may be for both structural units and combined units, such as an extreme load for the tower, e.g. a resulting extreme tower bottom moment for the tower. Other extreme loads may include a load related to a collapse force of a single tower element. The associated design loads may also include fatigues loads, such as a listing of how many load cycles of a given size that a tower section can withstand. Some design loads are design driving, e.g. the design load with the lowest load where the tower is collapsing.

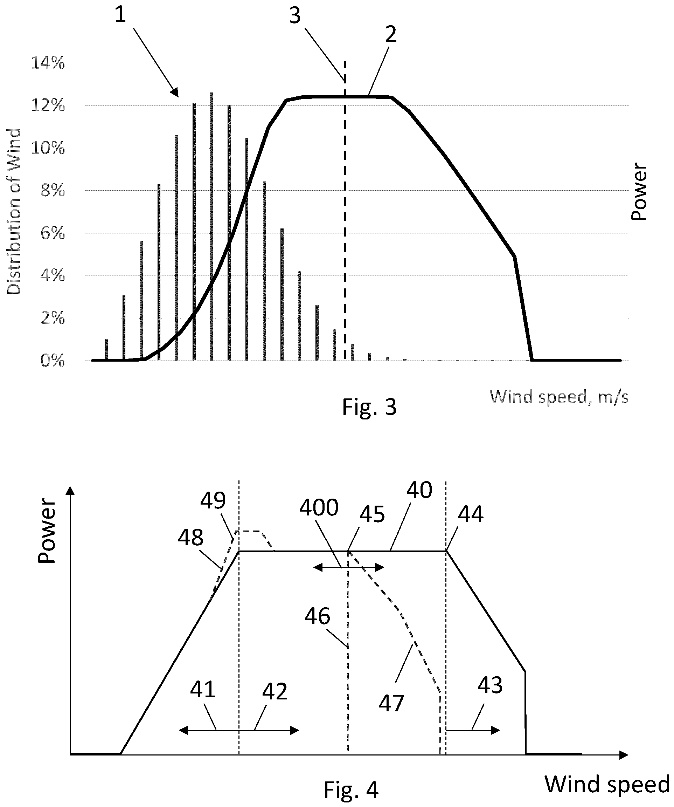

Fig. 3 illustrates a wind profile 1 combined with a power curve 2 of an example wind turbine for a given geographic region.

The figure shows wind speed distribution data 1 of a site of the wind turbine in the wind speed range from 0 m/s to 30 m/s. As can be seen the wind speed distribution is centered in the lower part of the wind speed range. However, as power generation from a wind turbine increases with wind speed in the cube, even the relatively small contribution from the high wind area amounts to a certain percentage of the annual power production, often measured in terms of annual energy production AEP. Designing the wind turbine with the aim of optimizing the AEP for the wind turbine would lead to the power curve as shown in solid line 2.

Due to the number of wind turbines present in the geographic region of the wind turbine, there exists a wind speed, here illustrated by the dashed line 3, above which the power generated by the wind turbine would be surplus power. As a proxy parameter for when the production from the wind turbine exceeds the consumption of power in the regional grid is the electricity price. As the produced power becomes equal to and even exceeding the consumed power, the electricity price is reduced and may even become negative.

Fig. 4 illustrates schematic examples of different power curves, illustrating the wind turbines reference power as a function of wind speed for an example wind turbine. The figure schematically illustrates a power curve 40 optimized for AEP at a given geographic site. The power curve illustrates a partial load region 41, defined as the region with a wind speed below the rated wind speed needed for the wind turbine to produce rated power. Above the rated wind speed, the wind turbine operates in full load region 42. The full load region extents until a cut-out wind speed or a ramp-down wind speed 44, this region may be referred to as a high wind region 43.

In the partial load region 41, above a cut-in wind speed, the wind turbine progressively generates power. The turbine is operated in accordance with a reference power to follow an optimal power efficiency. In the full load region 42, the reference power is set constant to the rated power, and in the high wind region, the reference power is reduced, or the turbine is stopped.

The ramp-down wind speed 44 is for an AEP optimized power curve is the wind speed where the wind turbine is either cut-out or derated to reduce the loads to an acceptable level at high wind speeds. In the present invention, an adjusted ramp-down speed 45 is set as the determined wind speed where the maximal desired power generation is reached.

The adjusted ramp-down wind speed 45 may be set as a cut-out wind speed 46 or may mark the wind speed after which the reference power follows a power derate curve 47 with increasing wind speed, also referred to as an adjusted power derate curve. The shape of the adjusted power derate curve can be varied. Here it is exemplified with a first linear segment with a first derate rate, followed by a second linear derate rate with a higher derate rate, until a cut-out is reached.

In certain cases, the design driving loads at high wind speed may be different to the design driving loads at lower wind speeds, resulting in that it may be possible to run the wind turbine at lower wind speeds with a target power 48 being increased above a reference power defined by the power curve for a wind speed in a wind speed range. In the illustrated embodiment, the wind speed range 49 is in a knee region of a power curve for the wind turbine. In the partial load region, the target power may e.g. be reached by setting a rotor speed higher than a rated rotor speed while keeping the pitch angle at the power optimal pitch angle. In the full load region, the target power may e.g. be reached by setting the rotor speed to the rated rotor speed and reducing the pitch angle towards the power optimal pitch angle.

A wind turbine system is expected to be in operation for 20 years or more. In a situation wherein the maximal desired power generation from the wind turbines in the defined geographic region is adjusted to an adjusted maximal desired power generation, the ramp-down wind speed is adjusted to an adjusted ramp-down wind speed, and/or the power derate curve is adjusted to an adjusted power derate curve. In Figure 4, an adjusted ramp-down wind speed is illustrated by arrow 400. The ramp-down wind speed may be adjusted to a lower wind speed value in a situation where more than planned further wind turbines have been built in the geographic region. Adjusting the ramp-down wind speed downwards may lead to an increased lifetime of the wind turbine as the load exposure will be decreased. The ramp-down wind speed may be adjusted to a higher wind speed value in a situation where a power consumption demand has increased more than the amount of power generated by further wind turbines that have been built in the geographic region. Adjusting the ramp-down wind speed upwards may lead to a reduced lifetime of the wind turbine or may take advantage of an under-utilized load reserve of the wind turbine system. Also, the power derate curve may be adjusted to an adjusted power derate curve. In embodiments the adjusted power derate curve may be parallel offset together with the ramp-down wind speed but may also be adjusted in shape.

In an embodiment, the wind turbine system further comprises a load estimator for estimating a load impact. A load impact may be estimated using a model of the wind turbine system which based on sensor input or statistical data derived from sensor input, calculates a load impact, such as an experienced fatigue load value or an operational load value. The model may be based on aero-elastic load simulations, the model may also be a trained model based on a machine learning algorithm.

A benefit of application of a load estimator is that an actual load impact on the wind turbine system can be provided and used to compensate for constraints imposed from a structural parameter used in the design of the wind turbine system. In an embodiment, a control strategy of the wind turbine system is adjusted based on the estimated load impact.

A control strategy may comprise a specific ramp-down wind speed, such that a ramp-down wind is dynamically decreased for a load impact above a preset impact and increased for a load impact above a preset impact, e.g. decreased/increased by a predefined amount. The control strategy may comprise to set the cut-out wind speed to the ramp-down wind speed for a load impact above a preset impact, and otherwise operate with a power derate curve above the ramp-down wind speed.

The control strategy may also define a rated power level, speed, pitch and/or power setpoints in the knee region, gain values, activation thresholds for load mitigation features, such as individual pitching for reducing asymmetric rotor loads. Other elements of a control strategy may be thrust limits, wind sector management scheme, etc.

Although the present invention has been described in connection with the specified embodiments, it should not be construed as being in any way limited to the presented examples. The invention can be implemented by any suitable means; and the scope of the present invention is to be interpreted in the light of the accompanying claim set. Any reference signs in the claims should not be construed as limiting the scope.

Example embodiments of the invention have been described for the purposes of illustration only, and not to limit the scope of the invention as defined in the accompanying claims.

## Claims

1. A method for structurally designing a wind turbine system, the method comprising:
obtain wind speed distribution data of a site of the wind turbine system, the site of the wind turbine system being in a defined geographic region;
obtain structural design parameters of the wind turbine system, the structural design parameters being associated with one or more design loads;
obtain a measure for power generation from wind turbines in the defined geographic region of the wind turbine system, the measure for power generation from wind turbines is obtained as a function of the wind speed distribution data in the defined geographic region;
based on the measure for power generation, obtain a maximal desired power generation from the wind turbines in the defined geographic region;
determine a wind speed where the maximal desired power generation is reached;
setting a ramp-down wind speed of the wind turbine system to the determined wind speed, the ramp-down wind speed being a wind speed above which a generated power is reduced.

2. The method according to claim 1, further comprising:
adjusting a structural parameter such that a design load is not reached by the a component of the wind turbine system when the wind turbine system experiences a wind speed at or above the ramp-down wind speed;
designing the wind turbine system with the structural parameter.

3. The method according to the preceding claims wherein the maximal desired power generation is set based on an estimated power consumption in the defined geographic region.

4. The method according to the preceding claims wherein the maximal desired power generation may be set as a fraction of the estimated power consumption in the defined geographic region.

5. The method according to the preceding claims wherein the maximal desired power generation is set based on a price profile for the electricity in defined geographic region.

6. The method according to the preceding claims wherein the design load is an extreme load of a component of the wind turbine system.

7. The method according to the preceding claims wherein the design load is a fatigue load of a component of the wind turbine system, and wherein the structural parameter is adjusted to reach an expected lifetime of the component.

8. The method according to claims 6 or 7, wherein the component is a tower, a foundation, a blade bearing type, a bedframe, a converter type, a switch gear.

9. The method according to the preceding claims wherein the ramp-down wind speed is a cut-out wind speed, or where the reduction of the generated power above the ramp-down wind speed follows a power derate curve with increasing wind speed.

10. The method according to the preceding claims wherein a target power is increased above a reference power for a wind speed in a wind speed range.

11. The method according to claim 10 wherein the wind speed range is in a knee region of a power curve for the wind turbine system.

12. The method according to the preceding claims wherein upon an adjusted maximal desired power generation from the wind turbines in the defined geographic region, the ramp-down wind speed is adjusted to an adjusted ramp-down wind speed, and/or where the reduction of the generated power above the ramp-down wind speed follows a power derate curve with increasing wind speed, the power derate curve is adjusted to an adjusted power derate curve.

13. The method according to the preceding claims wherein the wind turbine system further comprises a load estimator for estimating a load impact, and where a control strategy of the wind turbine system is adjusted based on the estimated load impact.

14. A computer program comprising instructions which, when the program is executed by a computer, cause the computer to carry out the method according to the preceding claims.

15. A wind turbine system designed in accordance with the method according to the preceding claims.
